# EUROPEAN PATENT SPECIFICATION

(11) **EP 3 461 278 B1**
(45) Date of publication and mention of the grant of the patent: **21.08.2024**
(21) Application number: 17800289.5
(22) Date of filing: 19.05.2017
(51) Int. Cl.: E21B 33/00, E21B 33/03, E21B 33/038, F16L 23/16, F16L 23/20

(54) **METAL-TO-METAL WELL EQUIPMENT SEAL**
METALL-METALL-BOHRLOCHAUSRÜSTUNGSDICHTUNG
JOINT D'ÉQUIPEMENT DE PUITS MÉTAL-MÉTAL

(30) Priority: 19.05.2016 US 201662338905 P
(43) Date of publication of application: 03.04.2019
(73) Proprietor: Control Flow Inc., Houston, TX 77064 (US)
(72) Inventor: IRVINE, Jock, W., Houston, TX 77065 (US); LAMBERT, Thomas, M., Houston, TX 77073 (US)
(74) Representative: Barker Brettell LLP
(86) International application number: PCT/US2017/033646
(87) International publication number: WO 2017/201474

(56) References cited:
- EP-A1- 2 619 496
- EP-A2- 2 828 560
- CH-A- 499 052
- US-A- 3 307 854
- US-A- 3 507 506
- US-A- 5 505 464
- US-A- 5 944 319
- US-A1- 2015 330 169
- US-B2- 6 869 080
- US-B2- 8 205 890
- US-B2- 9 033 054
- US-B2- 9 045 961

## Description

### FIELD

Embodiments usable within the scope of the present disclosure relate, generally, to a pressure-activated metal-to-metal seal for wellheads and other oil & gas equipment. The metal-to-metal seals are operable in highly corrosive, high-temperature high-pressure (HPHT) conditions.

### BACKGROUND

It is increasingly common in the oil & gas industry for exploration operations to take place in harsh, unfriendly environments and well conditions. Therefore, wellhead equipment must be built to withstand high pressure, high temperature (HPHT) environments, as well as to operate efficiently within conditions that include high levels of sulfides, carbon dioxide, and other corrosive gases or compounds. Such conditions often require a "dual" seal, meaning at least two independent barriers.

Currently, a common procedure is to coat flanged outlets with a non-corrosive metal, such as Inconel, and accomplish a secondary seal using elastomeric rings or gaskets. However, even these options often see high failure rates. Additionally, they often have limited versatility as the metal must be machined for each joint.

Examples of ring seals can be found in US 3,507,506, EP 2 828 560, EP 2 619 496, and CH 499 052.

US 3,507,506 describes a pipe joint seal for large size pipes in the form of a tubular member having blunt ends; this is adapted to be disposed in blunt end recesses of aligned flanged pipes connected together under stressed conditions, such as by studs.

EP 2 828 560 describes a seal assembly for a piping connection, comprising; a first part having at least one projecting rib extending at least partially along an outer circumference thereof, and a second part arranged to be attached to the first part, the second part being provided with at least one recess on an inner surface thereof, which recess is adapted to receive the projecting rib when the first and second parts are connected, and the recess has a larger cross-section area than the cross-section area occupied by the projecting rib within the recess, such that when the first and second parts are connected, they are free to move relative to each other in at least one direction.

EP 2 619 496 describes a tubular joint comprising: first and second tubular members; a metallic seal ring positioned between the tubular members and having sealing surfaces designed to mate with corresponding sealing surfaces of the tubular members to form a primary seal; an additional seal provided between the tubular members radially outwardly of the primary seal; a fluid channel having an outlet opening in an end surface of the first tubular member radially outwardly of said primary seal and radially inwardly of said additional seal; and annular seal members interposed between the seal ring and the tubular members radially outwardly of the primary seal and radially inwardly of said outlet opening and designed to allow fluid flow past the seal members in a radial direction inwards and to prevent fluid flow past the seal members in a radial direction outwards.

CH 499 052 describes pipe connections in which the flanges of the pipes to be connected are mechanically tensioned by the forces generated by an external tensioning device and where a metallic ring seal is provided.

US 3,507,506 describes a pipe joint seal for large size pipes in the form of a tubular member having blunt ends, which is adapted to be disposed in blunt end recesses of aligned flange pipes connected together under stressed conditions. Outer annular marginal grooves near the ends of the tubular members are provided to form noses that concentrate distortion under the stressed conditions at the ends. A stiffening collar is provided integral with the middle section of the tubular member for disposition between adjacent flanges of the pipes.

A need exists for a system which is made more reliable by the internal pressure inside the wellhead and which can be independently pressure tested at installation. A need also exists for a system which can be adapted and installed by modification in existing API standard flanges/outlets, along with the standard API ring gaskets or ASME-equivalent ring-type joints to provide an additional corrosion-resistant barrier through a metal-to-metal seal.

### SUMMARY OF THE INVENTION

Embodiments of the apparatus described herein meet this and other needs.

The invention provides a system for establishing a metal-to-metal seal joining two bores, as defined in claim 1.

### BRIEF DESCRIPTION OF THE DRAWINGS

In the detailed description of the embodiments, presented below, reference is made to the accompanying drawings:
FIG. 1A depicts an overhead view of an embodiment of the seal disclosed herein.
FIG. 1B depicts a cross-section of the embodiment of the seal depicted in FIG. 1A along section line B-B.
FIG. 2A depicts a flange connection to be used with an embodiment of the seal disclosed herein.
FIG. 2B depicts a cross-section of the flange connection depicted in FIG. 2A along section line B-B.
FIG. 2C depicts a magnified cross-section of section C of the flange connection depicted in FIG. 2B.
FIG. 3A depicts a cross-section view of an embodiment of the seal disclosed herein for use in a flange-to-flange connection.
FIG. 3B depicts a magnified view of section B of the embodiment depicted in FIG. 3A.
FIG. 3C depicts a cross-section view of an embodiment of the seal disclosed herein for use in a flange-to-flange connection.
FIG. 3D depicts a magnified view of section D of the embodiment depicted in FIG. 3B.
FIG. 4A depicts a standard studded wellhead outlet with an embodiment of the seal and test port disclosed herein.
FIG. 4B depicts a swivel flanged wellhead outlet with an embodiment of the seal and test port disclosed herein.
FIG. 4C depicts a swivel wellhead outlet with an embodiment of the seal and test port disclosed herein.
FIG. 5A depicts a zoomed-in view of one embodiment of the seal disclosed herein.
FIG. 5B depicts a zoomed-in view of an alternate embodiment of the seal disclosed herein.
FIG. 6A depicts a prior art flange connection.
FIG. 6B depicts a zoomed-in flange connection having an embodiment of a test port as disclosed herein.
FIG. 7 shows a perspective/cutaway view of a flange having the seal and test port disclosed herein.

One or more embodiments are described below with reference to the listed Figures.

### DETAILED DESCRIPTION OF THE EMBODIMENTS

Before describing selected embodiments of the present disclosure in detail, it is to be understood that the present invention is not limited to the particular embodiments described herein. The disclosure and description herein is illustrative and explanatory of one or more presently preferred embodiments and variations thereof.

As well, it should be understood the drawings are intended to illustrate and plainly disclose presently preferred embodiments to one of skill in the art, but are not intended to be manufacturing level drawings or renditions of final products and may include simplified conceptual views as desired for easier and quicker understanding or explanation. As well, the relative size and arrangement of the components may differ from that shown.

Moreover, it will be understood that various directions such as "upper," "lower," "bottom," "top," "left," "right," and so forth are made only with respect to explanation in conjunction with the drawings, and that the components may be oriented differently, for instance, during transportation and manufacturing as well as operation.

The present invention relates, generally, to a metal-to-metal seal configuration for use in highly corrosive, HPHT environments but has application in other areas as well. This configuration can work in tandem with an existing seal such as a ring-type joint (RTJ) to create a secondary metal-to-metal seal, whereas in existing configurations the secondary seal is usually a standard API ring gasket or single seal combination of metal and elastomer or other easily degraded material.

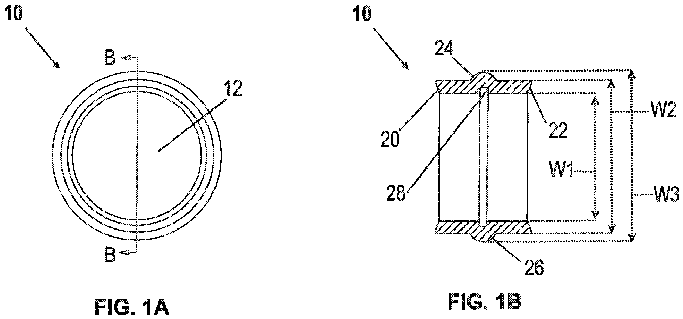

Referring now to FIGS. 1A and 1B, an overhead view of an exemplar seal 10 is shown, in overhead view in FIG. 1A, as a roughly cylindrical metallic surface surrounding a bore 12 therethrough, and in cross-section along section line B-B in FIG. 1B. Seal 10 comprises a total of four sealing surfaces 20, 22, 24, 26, where sealing surfaces 20, 22 form a lip on either side of the seal while sealing surfaces 24, 26 form the shape of a radial (i.e., semi-circular) bulge extending concentrically around the longitudinal axis of the seal.

Internally, the seal also features a groove 28 located interior to the two sealing surfaces 24, 26. Groove 28 fulfills two functions: it allows the seal 10 to flex slightly should there be bending, movement, or a change in temperature to the equipment during installation and operation, and it also serves as an extraction groove should the seal 10 become lodged within the equipment.

In the depicted embodiment, seal 10 comprises a first width W1 which is defined by the inner diameter of the bore 12 enclosed by the seal 10, a second width W2 which is defined by the outer diameter of the seal 10 (i.e., the difference between W1 and W2 is a function of seal thickness), and a third width W3 which represents the maximal width at the apex of the two sealing surfaces 24, 26.

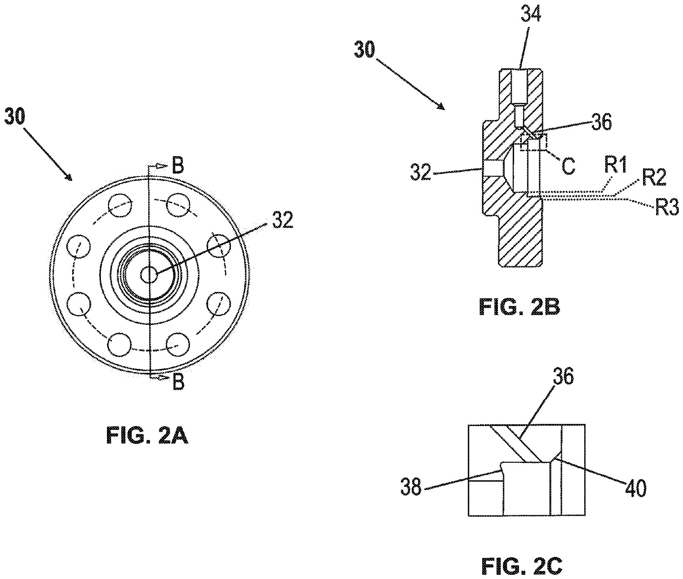

Referring now to FIGS. 2A-2C, a standard flange connection 30 is shown comprising a central bore 32 therethrough. FIG. 2A depicts the flange connection 30 in side view, while FIG. 2B depicts a cross-sectional view along section line B-B. FIG. 2B depicts a test port 34 located within the flange connection 30 for monitoring the internal pressure of the flange connection 30. FIG. 2C depicts a magnified view of section C of FIG. 2B which includes the fluid connection 36 between the test port 34 and the central bore 30. Flange connection 30 is also depicted with a negatively angled sealing surface 38 which corresponds to the sealing surface 20 of the seal 10 (both depicted in FIG. 1B).

The central bore 32 of flange connection 30 is also depicted having a series of sealing surfaces 38,40 corresponding to stepwise changes in radius, shown as R1, R2, and R3. These radii R1, R2, R3 correspond to the W1, W2, W3 widths (i.e., diameters) shown in FIG. 1B. (As every diameter implies a radius and vice versa, they are marked as radii solely for clarity.)

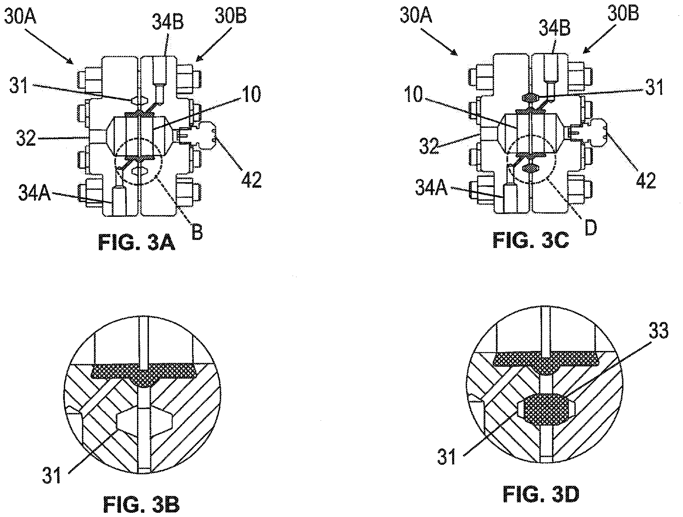

Referring now to FIGS. 3A-3D, two flange connections 30A, 30B are shown abutted end-to-end in cross-section with their respective bores aligned to form a single bore 32 therethrough. Seal 10 is aligned within bore 32 and the sealing surfaces 20, 22, 24, 26 of the seal 10 (depicted in FIG. 1B) are aligned with the respective sealing surfaces of the flange connections 30A, 30B. Test ports 34A and 34B are shown fluidly connected to seal 10, and a test plug 42 may be present during pressure testing. In addition, flange connections 34A, 34B may comprise a secondary groove 31. This secondary groove 31 can accommodate an RTJ gasket 33 illustrated in FIG. 3D.

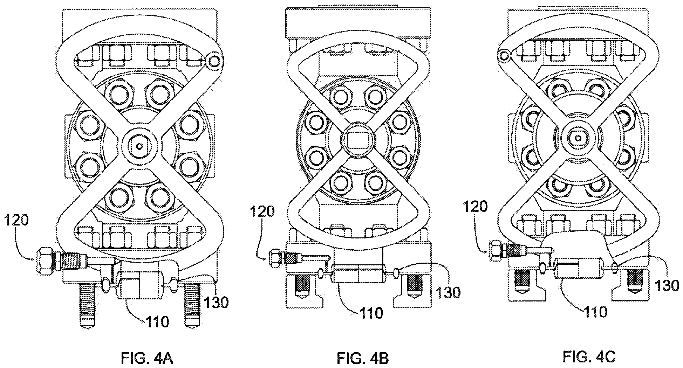

Referring now to FIGS. 4A-4C, three examples of wellhead connections are depicted, each having a secondary seal 110 and a test port 120, as well as a standard ring-type joint (RTJ) 130. The present invention can be retro-fitted to existing "in-field" pieces of equipment (gate valves, wellheads, Christmas tree valves, choke valves, spools) or can be originally present in equipment through manufacturing. As shown, test port 120 can be in communication with the area between RTJ seal 130 and secondary seal 110 in order to determine the efficacy of the secondary seal in isolation.

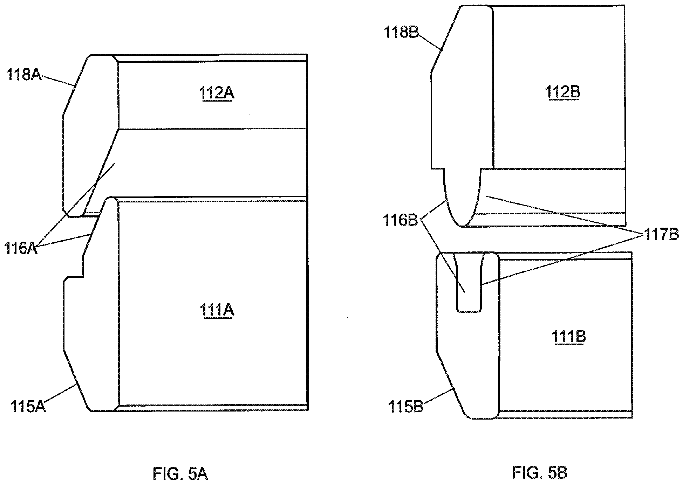

Referring to FIG. 5A, a zoomed-in alternative embodiment of the secondary seal 110A as depicted in FIGS. 4A-14C is shown. The embodiment depicted in FIG. 5A comprises a lower sealing bowl 111A, an upper sealing bowl 112A, and three sealing areas 115A, 116A, and 118A. In this embodiment, the fluid pressure within a wellbore is in the upward direction from lower sealing bowl 111A to upper sealing bowl 112A. Thus, sealing area 115A seals the lower sealing bowl 111A against well equipment (e.g., wellheads, gate valves, Christmas tree valves, choke valves, spools, etc.) while sealing area 118A seals the upper sealing bowl 112A against the well equipment to be connected. Sealing area 116A seals lower sealing bowl 111A against upper sealing bowl 112A. The angles of sealing areas 115A, 116A, and 118A ensure that fluid pressure works to further activate the seal after initial connection through torqued studs/nuts as shown in FIGS. 4A-4C.

Referring to FIG. 5B, an alternate embodiment of a secondary seal 110B is depicted which can be used interchangeably and in the same fashion as secondary seal 110A. As with secondary seal 110A, secondary seal 110B comprises a lower sealing bowl 111B and upper sealing bowl 112B, and sealing surfaces 115B and 118B which function substantially similar to 115A and 118A. Secondary seal 110B additionally can comprise two intermediate sealing areas 116B and 117B, which further isolate the connected equipment against HPHT fluids.

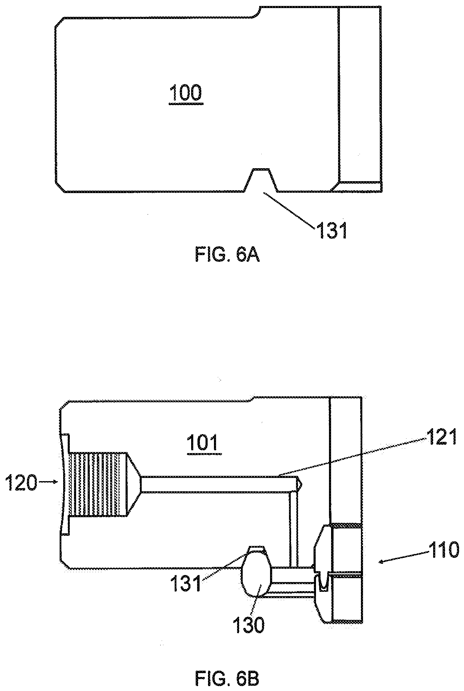

Referring to FIGS. 6A-6B, a standard prior art flange connection 100 is shown having a groove 131 for accepting a ring-type joint 130 (shown in FIGS. 4A-4C and 6B) acting as a primary seal. FIG. 6B depicts a modified flange 101 having a testing port 120, which is in fluid communication through an angled aperture 121 into the space between ring-type joint 130 and secondary seal 110 (shown as the alternate embodiment depicted in FIG. 5B). The configuration shown in FIG. 6B allows the secondary seal 110 to be monitored and tested independently of ring-type joint 130.

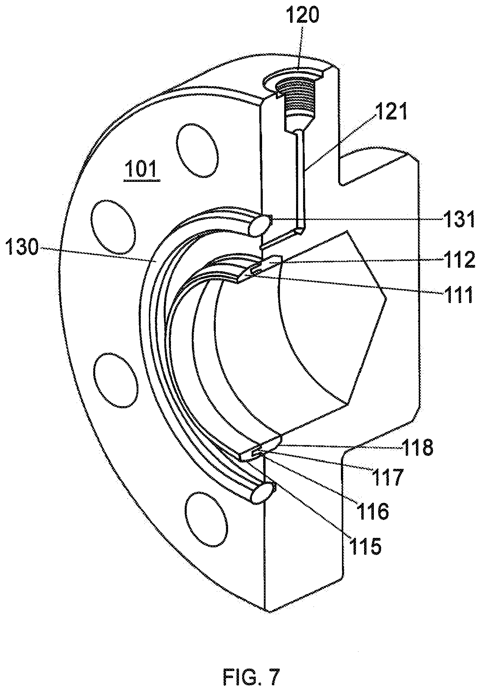

Referring to FIG. 7, a sectional view of a blind flange 101 having a configuration substantially similar to that shown in FIG. 3B is depicted, with flange 101 more clearly showing the testing port 120 and aperture 121 in relation to the groove 130 and ring-type joint 131, as well as the metal-to-metal seal 110 (shown as the alternate embodiment depicted in FIG. 2B) comprising lower sealing bowl 111, upper sealing bowl 112, and sealing surfaces 115, 116, 117, and 18.

The depicted embodiments are capable of maintaining seals at pressures of 34,47MPa (5000psi) in flanged outlets and higher in other end connections (OEC), and temperatures in excess of 250°C; it can be appreciated that all working pressures and configurations described in API specification 6A may be designed for utilizing the central design principles shown herein.

Although several preferred embodiments of the invention have been illustrated in the accompanying drawings and described in the foregoing specification, it will be understood by those of skill in the art that additional embodiments, modifications and alterations may be constructed from the invention principles disclosed herein. For instance, while the seal is depicted as a connection between two standard flanges, the same profile may be utilized in other pieces of equipment, e.g., swivel flanges, tubing hangers, clamp hub connections, and OECs. The scope of protection is defined by the claims.

## Claims

1. A system for establishing a metal-to-metal seal joining two bores, the system comprising:
a generally cylindrical seal (10) having a first end, a second end, an innermost diameter (W1), an outer diameter (W2), and a further outer diameter (W3), a first metallic sealing surface (20) defined by a surface area extending from the innermost diameter (W1) to the outer diameter (W2) at the first end, a second metallic sealing surface (22) defined by a surface area extending from the innermost diameter (W1) to the outer diameter (W2) at the second end, a third metallic sealing surface (24) defined by a surface area extending from the outer diameter (W2) to the further outer diameter (W3) proximate to the first end, and a fourth metallic sealing surface defined by a surface area extending from the outer diameter (W2) to the further outer diameter (W3) proximate to the second end;
a first piece of equipment (30A) having a bore (32) therethrough, wherein the bore (32) comprises a first inner diameter (R1), a second inner diameter (R2), and a metallic sealing surface (38) between the first and second inner diameters (R1, R2); and
a second piece of equipment (30B) having a bore (32) therethrough, wherein the bore comprises the first inner diameter (R1), the second inner diameter (R2), and a metallic sealing surface (38) between the first and second inner diameters (R1, R2),
wherein the metallic sealing surface of the first piece of equipment (38) abuts the first metallic sealing surface (20) of the seal, the metallic sealing surface of the second piece of equipment (38) abuts the second metallic sealing surface (22) of the seal, and the bores (32) of the first and second pieces of equipment are aligned and joined through the inner diameter of the seal (10), **characterized in that** the third and fourth metallic sealing surfaces (24, 26) are arcuate and form a radial bulge extending concentrically from the longitudinal axis of the seal.

2. The system of claim 1, wherein the seal (10) comprises a groove (28) along the inner diameter.

3. The system of claim 1, wherein the first metallic sealing surface (20) and the second metallic sealing surface (22) comprise a positive angle.

4. The system of claim 3, wherein the metallic sealing surface (38) of the first piece of equipment (30A) comprises a negative angle and the metallic sealing surface (38) of the second piece of equipment (30B) comprises a negative angle.

5. The system of claim 1, wherein at least one of the first piece of equipment (30A) or the second piece of equipment (30B) comprises a test port (34A, 34B), wherein the test port (34A, 34B) places an outer diameter (R2) of the at least one piece of equipment (30A, 30B) in fluid communication with the outer diameter (W2) of the seal (10).

6. The system of claim 1, wherein at least one of the first piece of equipment (30A) or the second piece of equipment (30B) comprises a secondary groove (31), wherein the secondary groove (31) faces the other of the first piece of equipment (30A) or the second piece of equipment (30B), and wherein the secondary groove extends around the bore.

7. The system of claim 1, further comprising a ring gasket seal (33) within the secondary groove (31).

8. The system of claim 1, wherein at least one of the first piece of equipment (30A) or the second piece of equipment (30B) is a flange connection.

9. The system of claim 1, wherein the first piece of equipment (30A) and the second piece of equipment (30B) each further comprise an additional metallic sealing surface (40), wherein the additional metallic sealing surfaces (40) of the first piece of equipment and the second piece of equipment (30A, 30B) abut the third and fourth metallic sealing surfaces (24, 26) of the seal (10), respectively.

## Patentansprüche

1. System zum Herstellen einer Metall-Metall-Dichtung, die zwei Bohrungen verbindet, das System Folgendes umfassend:
eine im Allgemeinen zylindrische Dichtung (10) mit einem ersten Ende, einem zweiten Ende, einem innersten Durchmesser (W1), einem Außendurchmesser (W2) und einem weiteren Außendurchmesser (W3), einer ersten metallischen Dichtfläche (20), die durch einen Oberflächenbereich definiert ist, der sich von dem innersten Durchmesser (W1) zu dem Außendurchmesser (W2) an dem ersten Ende erstreckt, einer zweiten metallischen Dichtfläche (22), die durch einen Oberflächenbereich definiert ist, der sich von dem innersten Durchmesser (W1) zu dem Außendurchmesser (W2) an dem zweiten Ende erstreckt, einer dritten metallischen Dichtfläche (24), die durch einen Oberflächenbereich definiert ist, der sich von dem Außendurchmesser (W2) zu dem weiteren Außendurchmesser (W3) in der Nähe des ersten Endes erstreckt, und einer vierten metallischen Dichtfläche, die durch einen Oberflächenbereich definiert ist, der sich von dem Außendurchmesser (W2) zu dem weiteren Außendurchmesser (W3) in der Nähe des zweiten Endes erstreckt;
ein erstes Ausrüstungsstück (30A) mit einer Bohrung (32) dadurch, wobei die Bohrung (32) einen ersten Innendurchmesser (R1), einen zweiten Innendurchmesser (R2) und eine metallische Dichtfläche (38) zwischen dem ersten und dem zweiten Innendurchmesser (R1, R2) umfasst; und
ein zweites Ausrüstungsstück (30B) mit einer Bohrung (32) dadurch, wobei die Bohrung den ersten Innendurchmesser (R1), den zweiten Innendurchmesser (R2) und eine metallische Dichtfläche (38) zwischen dem ersten und dem zweiten Innendurchmesser (R1, R2) umfasst,
wobei die metallische Dichtfläche des ersten Ausrüstungsstücks (38) an der ersten metallischen Dichtfläche (20) der Dichtung anliegt, die metallische Dichtfläche des zweiten Ausrüstungsstücks (38) an der zweiten metallischen Dichtfläche (22) der Dichtung anliegt,
und die Bohrungen (32) des ersten und des zweiten Ausrüstungsstücks ausgerichtet sind und durch den Innendurchmesser der Dichtung (10) verbunden sind, **dadurch gekennzeichnet, dass** die dritte und die vierte metallische Dichtfläche (24, 26) bogenförmig sind und eine radiale Ausbuchtung ausbilden, die sich konzentrisch von der Längsachse der Dichtung erstreckt.

2. System nach Anspruch 1, wobei die Dichtung (10) eine Nut (28) entlang des Innendurchmessers umfasst.

3. System nach Anspruch 1, wobei die erste metallische Dichtfläche (20) und die zweite metallische Dichtfläche (22) einen positiven Winkel umfassen.

4. System nach Anspruch 3, wobei die metallische Dichtfläche (38) des ersten Ausrüstungsstücks (30A) einen negativen Winkel umfasst und die metallische Dichtfläche (38) des zweiten Ausrüstungsstücks (30B) einen negativen Winkel umfasst.

5. System nach Anspruch 1, wobei mindestens eines des ersten Ausrüstungsstücks (30A) oder des zweiten Ausrüstungsstücks (30B) einen Testport (34A, 34B) umfasst, wobei der Testport (34A, 34B) einen Außendurchmesser (R2) des mindestens einen Ausrüstungsstücks (30A, 30B) in Fluidverbindung mit dem Außendurchmesser (W2) der Dichtung (10) setzt.

6. System nach Anspruch 1, wobei mindestens eines des ersten Ausrüstungsstücks (30A) oder des zweiten Ausrüstungsstücks (30B) eine sekundäre Nut (31) umfasst, wobei die sekundäre Nut (31) dem anderen des ersten Ausrüstungsstücks (30A) oder des zweiten Ausrüstungsstücks (30B) zugewandt ist und wobei sich die sekundäre Nut um die Bohrung herum erstreckt.

7. System nach Anspruch 1, weiterhin eine Ringdichtung (33) innerhalb der sekundären Nut (31) umfassend.

8. System nach Anspruch 1, wobei mindestens eines des ersten Ausrüstungsstücks (30A) oder des zweiten Ausrüstungsstücks (30B) eine Flanschverbindung ist.

9. System nach Anspruch 1, wobei das erste Ausrüstungsstück (30A) und das zweite Ausrüstungsstück (30B) ferner jeweils eine zusätzliche metallische Dichtfläche (40) umfassen, wobei die zusätzlichen metallischen Dichtflächen (40) des ersten Ausrüstungsstücks und des zweiten Ausrüstungsstücks (30A, 30B) an der dritten bzw. an der vierten metallischen Dichtfläche (24, 26) der Dichtung (10) anliegen.

## Revendications

1. Système pour établir un joint métal-métal joignant deux alésages, le système comprenant :
un joint généralement cylindrique (10) ayant une première extrémité, une deuxième extrémité, un diamètre le plus interne (W1), un diamètre externe (W2), et un diamètre externe supplémentaire (W3), une première surface d'étanchéité métallique (20) définie par une aire de surface s'étendant du diamètre le plus interne (W1) au diamètre externe (W2) au niveau de la première extrémité, une deuxième surface d'étanchéité métallique (22) définie par une aire de surface s'étendant du diamètre le plus interne (W1) au diamètre externe (W2) au niveau de la deuxième extrémité, une troisième surface d'étanchéité métallique (24) définie par une aire de surface s'étendant du diamètre externe (W2) au diamètre externe supplémentaire (W3) à proximité de la première extrémité, et une quatrième surface d'étanchéité métallique définie par une aire de surface s'étendant du diamètre externe (W2) au diamètre externe supplémentaire (W3) à proximité de la deuxième extrémité ;
un premier équipement (30A) ayant un alésage (32) à travers celui-ci, dans lequel l'alésage (32) comprend un premier diamètre interne (R1), un deuxième diamètre interne (R2), et une surface d'étanchéité métallique (38) entre les premier et deuxième diamètres internes (R1, R2) ; et
un deuxième élément d'équipement (30B) ayant un alésage (32) à travers celui-ci, dans lequel l'alésage comprend le premier diamètre interne (R1), le deuxième diamètre interne (R2), et une surface d'étanchéité métallique (38) entre les premier et deuxième diamètres internes (R1, R2),
dans lequel la surface d'étanchéité métallique du premier élément d'équipement (38) vient en butée contre la première surface d'étanchéité métallique (20) du joint, la surface d'étanchéité métallique du deuxième élément d'équipement (38) vient en butée contre la deuxième surface d'étanchéité métallique (22) du joint,
et les alésages (32) des premier et deuxième éléments d'équipement sont alignés et joints à travers le diamètre interne du joint (10), **caractérisé en ce que** les troisième et quatrième surfaces d'étanchéité métalliques (24, 26) sont arquées et forment un renflement radial s'étendant de manière concentrique à partir de l'axe longitudinal du joint.

2. Système selon la revendication 1, dans lequel le joint (10) comprend une rainure (28) le long du diamètre interne.

3. Système selon la revendication 1, dans lequel la première surface d'étanchéité métallique (20) et la deuxième surface d'étanchéité métallique (22) comprennent un angle positif.

4. Système selon la revendication 3, dans lequel la surface d'étanchéité métallique (38) du premier élément d'équipement (30A) comprend un angle négatif et la surface d'étanchéité métallique (38) du deuxième élément d'équipement (30B) comprend un angle négatif.

5. Système selon la revendication 1, dans lequel au moins l'un du premier élément d'équipement (30A) ou du deuxième élément d'équipement (30B) comprend un orifice de test (34A, 34B), dans lequel l'orifice de test (34A, 34B) place un diamètre externe (R2) de l'au moins un élément d'équipement (30A, 30B) en communication fluidique avec le diamètre externe (W2) du joint (10).

6. Système selon la revendication 1, dans lequel au moins un élément d'équipement parmi le premier élément d'équipement (30A) ou le deuxième élément d'équipement (30B) comprend une rainure secondaire (31), dans lequel la rainure secondaire (31) fait face à l'autre élément d'équipement parmi le premier élément d'équipement (30A) ou le deuxième élément d'équipement (30B), et dans lequel la rainure secondaire s'étend autour de l'alésage.

7. Système selon la revendication 1, comprenant en outre un joint d'étanchéité annulaire (33) à l'intérieur de la rainure secondaire (31).

8. Système selon la revendication 1, dans lequel au moins l'un du premier élément d'équipement (30A) ou du deuxième élément d'équipement (30B) est un raccord à bride.

9. Système selon la revendication 1, dans lequel le premier élément d'équipement (30A) et le deuxième élément d'équipement (30B) comprennent chacun en outre une surface d'étanchéité métallique additionnelle (40), dans lequel les surfaces d'étanchéité métalliques additionnelles (40) du premier élément d'équipement et du deuxième élément d'équipement (30A, 30B) viennent en butée contre les troisième et quatrième surfaces d'étanchéité métalliques (24, 26) du joint (10), respectivement.
